# EUROPEAN PATENT SPECIFICATION

(11) **EP 1 737 253 B1**
(45) Date of publication and mention of the grant of the patent: **09.04.2008**
(21) Application number: 05291321.7
(22) Date of filing: 20.06.2005
(51) Int. Cl.: H04Q 3/545, H04M 3/24, G06F 11/16

(54) **Fault tolerant single plane switch fabric for a telecommunication system**
Fehlertolerante Schaltmatrix mit einer Ebene für ein Telekommunikationssystem
Matrice de commutation à un seul plan et à tolérance de fautes pour un système de télécommunication

(43) Date of publication of application: 27.12.2006
(73) Proprietor: Alcatel Lucent, 75008 Paris (FR)
(72) Inventor: Pauwels, Bart Joseph Gerard, 3980 Tessenderlo (BE)
(74) Representative: Narmon, Gisèle Marie Thérèse

(56) References cited:
- EP-A- 1 133 198
- US-A- 6 125 111
- US-A1- 2002 019 958

## Description

The present invention relates to a switching node of a telecommunication system comprising a plurality of line termination modules interconnected by a fault tolerant single plane switch fabric.

Such a switching node is already known in the art as will be described by the four examples below.

A first known switching node is constituted by a dual plane switch fabric in active / standby mode. One plane of the switch fabric is dimensioned to handle the full number of physical ports to/from line termination modules with their expected traffic load, when no failure in the fabric occurs. This plane is then duplicated physically. The line termination modules send traffic to and receive traffic from their fabric plane ports to the active switch fabric plane. In case a failure is detected in this plane, or the ports of one or more line termination modules to it, all line termination modules switch to sending to / receiving from the ports of the standby fabric plane.

With this first known switching node, the cost, footprint and power dissipation of the switch fabric is double of what is needed for actual operation. The additional investment remains unused except when activated for protection, for a few minutes per year on average. The associated protection and switch-over software is usually rather complex, exercised only under stress conditions, and as such less hardened. Traffic after distribution by the line termination module is confined to the active fabric plane. This implies that if a fabric plane port to/from one line termination module fails, the plane becomes useless for all line terminations. Some double fault cases will force putting out of service at least one line termination module in order to provide continued service to the others.

A second known switching node is constituted by a dual plane switch fabric in active / active mode. The physical configuration is the same as in the above first known switching node, yet now both planes carry a copy of the injected traffic. The sending line terminations offer an identical copy of the traffic to each plane. The receiving line termination modules are capable of detecting data loss or corruption on their receive fabric plane ports (one from each switch fabric plane), and they can autonomously select the best one. Some buffer-less implementations can offer hitless switch-over, by means of data synchronization mechanisms.

Again with this second known switching node, the cost, footprint and power dissipation of the switch fabric is double of what is needed for actual operation. The additional investment remains unused except when activated for protection, for a few minutes per year on average. Switch-over or multiple simultaneous faults are not an issue in this architecture.

A third known switching node is constituted by multiple parallel planes switch fabric in load sharing mode, e.g. MPSR. The traffic is distributed by the sending line termination modules across multiple (N) active switch fabric planes, in a load balanced way. Distribution can happen either per data packet micro-flow (to avoid the need for packet re-sequencing), per full data packet (possibly with re-sequencing at egress), or per data packet segment (in case of a fixed size cell switch fabric, also possibly with re-sequencing at egress). Failure in any of the planes can be detected and signaled to the line termination modules quickly, after which the offending plane is isolated by re-distributing traffic across the remaining (N-1 or less) healthy planes, by all line termination modules. The dimensioning of each plane depends on the degree of redundancy required, and is typically equal to the 1/(N-1)^{th} of the total traffic volume. Hitless protection is hardly possible in this configuration.

With this third known switching node, all planes operate independently, and use a static and low-level switch policy, especially in case of packet or packet segment based load balancing, to avoid corruption of micro-flows or even single packets that could be caused by different switching policies in parallel planes. Integration of sophisticated packet forwarding means in the planes themselves is not possible. Traffic after distribution by the line termination module is confined to a single fabric plane. This implies again that if a fabric plane port to/from one line termination module fails, the plane becomes useless for all line terminations.

A fourth known switching node is constituted by a Single Application Specific Integrated Circuit ASIC (Ethernet) switch fabric building blocks:
- that can connect to a limited number of line termination modules via a physical point-to-point interface;
- that provide for one or more high bandwidth extension interfaces, for interconnecting multiple of such modules either directly, or through a high speed 2^{nd} stage switch fabric;
- that support data and network layer packet classification and forwarding, with QoS awareness;
- that support link aggregation according to the Protocol 802.3ad for a limited number of links, spread across multiple interconnected modules.

Such building blocks are used to build compact single plane, non-redundant switch fabrics, or multi-plane fault-tolerant switch fabrics, based on Ethernet interconnection technology.

This fourth known switching node has the same drawbacks as the above third known switching node. Moreover, the built-in link aggregation Protocol 802.3ad cannot be applied on the links between one line termination module and two or more planes of the fault tolerant switch fabric, as these planes behave as separate sub-systems, each with their own classification, forwarding and QoS behavior.

Document US 2002/0019958 discloses a fault tolerant switch with at least two fabric switch boards, one of which is adapted to function as a spare fabric switch board.

In many types of switching or routing node equipment, the switch fabric is typically a centralized sub-system, which can cause total system outage in case of failure. Therefore it has to contain redundancy. However, as can be seen from the above, all the known switching nodes show drawbacks.

An object of the present invention is to provide a switching node wherein the switch fabric areas do not allow:
- to exchange user traffic that is injected in one area, with other areas;
- to exchange configuration & control information between areas while still maintaining the physical modularity required for any fault tolerant system.

According to the invention, this object is achieved due to the fact that said single plane switch fabric comprises a plurality of physically independent field replaceable elements interconnected by at least one switch module interface, and that each line termination module has a plurality of ports connected to ingress/ egress ports of at least two distinct field replaceable elements of said single plane switch fabric.

In this way, multiple logically disjointed switch planes are avoided. The traffic injected by a line termination module in one physical ingress port of the single plane switch fabric can reach any of the physical egress ports either directly through one Field Replaceable Element or through two (or more) Field Replaceable Elements via the Switch Module Interface(s).

It is to be noted that in the following part of this specification a Field Replaceable Element will generally be referred to as FRE.

Another characterizing embodiment of the present invention is that each of the field replaceable elements interconnected by switch module interfaces is adapted to perform all system management and configuration, and packet processing as required on data packets transmitted there through, when at least one field replaceable element is present.

This applies when one or more other field replaceable elements of the switch fabric are not present. When multiple FREs are present, they exchange traffic and configuration information in order to behave as a single switch fabric.

In this way, the switch fabric behaves as a single logical switch fabric with respect to the processing of data packets, i.e. for filtering, classification, forwarding, queuing, scheduling, ... In case of switch fabric plane or fabric plane port failure, a standard mechanism takes care of protection of the traffic.

Moreover, line modules can have different size access interfaces to the single logical, physically modular switch fabric, without a need for isolating perfectly operational parts of the latter due to reduced reachability for some of the line termination modules. This results from the fact that traffic from one field replaceable element can move to another field replaceable element, contrary to the

### prior art.

Also another characterizing embodiment of the present invention is that said switch module interface between the field replaceable elements allows hot-plugging.

In this way, it is possible to perform in-service removal or addition of field replaceable elements without disturbing the switching node. In other words, the switch fabric consists of multiple physically independent field replaceable elements, when it comes to repair and capacity extension in the field without service interruption.

In a preferred characterizing embodiment of the present invention, each line termination module is adapted to operate according to a data transport protocol to aggregate traffic on a group of physical interfaces with physically different field replaceable elements as on a single ingress/egress port.

The composing modules of this logically single plane modular switch fabric synchronize their classification and forwarding policy autonomously. There is no need for system specific protection and synchronization procedures. There is no time pressure on the synchronization, as mis-sequencing is avoided by load balancing at micro-flow-level, and as connectivity remains guaranteed thanks to the single plane behavior for user traffic, even with failing fabric port interfaces between some switch fabric modules and some line termination modules.

Still another characterizing embodiment of the present invention is that, according to a data transport protocol, said traffic is aggregated internally in a standard way on multiple physical links between said line termination modules.

After port failure in a field replaceable element, the QoS behavior, i.e. buffer admission, queuing and scheduling, is automatically adapted individually to the remaining traffic capacity to/from the affected line termination module. There is no need for a general priority traffic re-routing on all line termination modules.

Yet another characterizing embodiment of the present invention is that, according to a data transport protocol, said traffic is aggregated externally on multiple physical links towards other switching nodes.

Operators can benefit at the same time from redundancy and from capacity increase by introducing a single additional field replaceable element. Furthermore, the multi field replaceable element switch fabric offers a standard fault-tolerant, configurable size interface to the network side.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 shows a switching node with a Single fault tolerant plane consisting of two field replaceable elements modules interconnected by a switch module interface according to the invention; and
Fig. 2 shows a switching node as of Fig. 1 but with a Single fault tolerant plane consisting of three field replaceable elements modules.

The public standard 802.3ad for physical link aggregation, traffic load balancing and link failure isolation using Ethernet technology allows combining multiple physical point-to-point Ethernet links of the same capacity into one logical trunk interface between two nodes. This allows to easily extend the fault tolerant aspects of the architecture outside of the system, to neighboring other systems.

Moreover, small footprint Ethernet switch fabrics with integrated L2 - L3 classification and forwarding capabilities can be build with off-the-shelf components. These fabrics can be build as modular designs composed of hot-pluggable "Field Replaceable Elements" FRE.

The principle can be applied e.g. in an Ethernet based DSL Access Multiplexer. Line termination modules of different nature, providing ADSL, SHDSL, VDSL, plain 10/100/1000 Mb/s Ethernet or Ethernet Passive Optical Network interfaces to subscribers, are hooked together through a modular, link aggregation supporting Ethernet switch fabric with L2 - L3 processing capabilities.

The switch fabric consists of at least one Field Replaceable Element FRE, using at least one Ethernet switch fabric module, which provides a number of physical Ethernet interfaces at least equal to the number of Line Termination Modules LTM. The fabric can be extended with at least one other FRE, which links to the first FRE through a dedicated interface. The bandwidth of this interface is typically more than half of the aggregate bandwidth offered to all line termination modules served by one FRE.

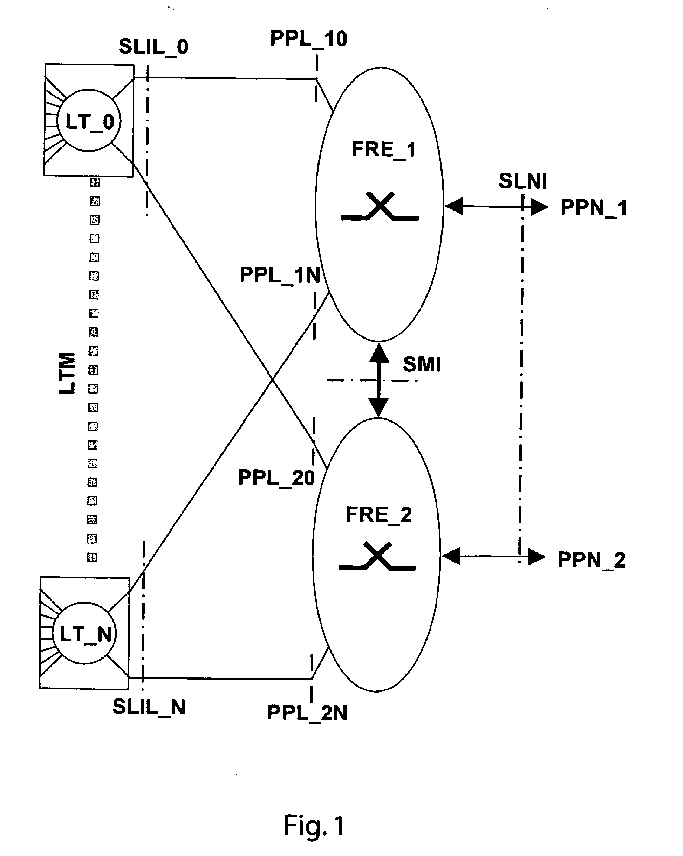

The telecommunication system shown at Fig. 1 comprises a switching node consisting of several Line Termination Modules LT_0 to LT_N interconnected by a fault tolerant single plane switch fabric. The fault tolerant single plane switch fabric comprises two physically independent Field Replaceable Elements FRE_1 and FRE_2 interconnected by a Switch Module Interface SMI.

Each Line Termination Module LTM, i.e. LT_0 ... LT_N, has several ports, also called physical switch fabric ports lines, of which one or more are connected to ingress/ egress ports, also called Physical Ports Lines PPL_10 ... PPL_1N; ... ; PPL_20 ... PPL2N, of at least two distinct field replaceable elements FRE_1 and FRE_2. The group of the physical ports lines of each line termination module LT_0 ... LT_N behaves as a Single Logical Interface Line SLIL_0 ... SLIL_N between the line termination module LTM and the logically single plane switch fabric, using the 802.3ad protocol.

The fault tolerant single plane switch fabric further has a plurality of Physical Port Network PPN_1 to PPN_2 connected to ingress/ egress ports of at least two distinct field replaceable elements FRE_1 and FRE_2. The Physical Port Network PPN_1 to PPN_2 coupled to the network side interface of the fault tolerant single plane switch fabric constitutes a Single Logical Network Interface SLNI.

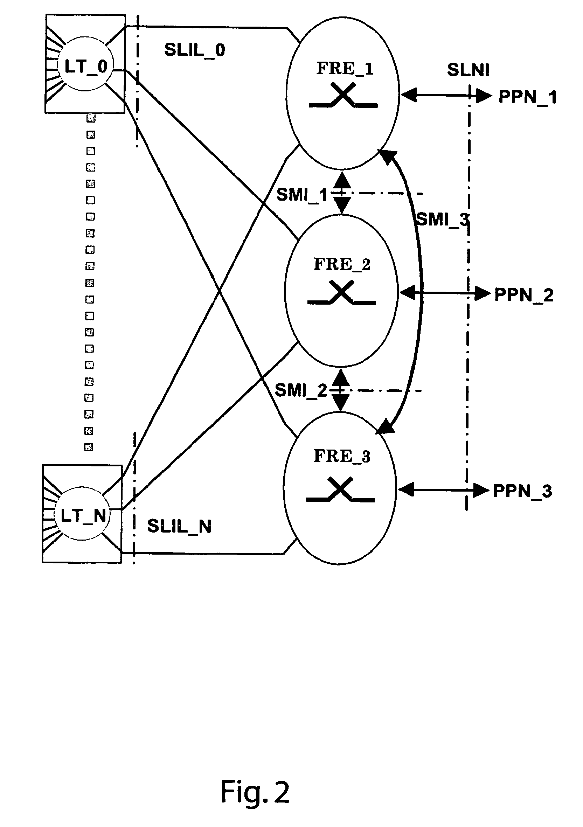

A similar telecommunication system is shown at Fig. 2. However, the fault tolerant single plane switch fabric of this system comprises three physically independent Field Replaceable Elements FRE_1, FRE_2 and FRE_3 interconnected to each other by three Switch Module Interfaces SMI_1, SMI_2 and SMI_3.

In any of the telecommunications of Fig. 1 or Fig. 2, the switch fabric comprising the field replaceable elements FRE interconnected by the switch module interfaces SMI is able to perform management and configuration on data packets transmitted there through. To this end, the switch fabric behaves as a single logical switch fabric with respect to the processing of data packets, i.e. for filtering, classification, forwarding, queuing, scheduling, ... In case of switch fabric plane or fabric plane port failure, a standard mechanism takes care of protection of the traffic.

Each line termination module LT_0 ... LT_N is able to operate according to a data transport protocol to aggregate traffic on a group of physical interfaces with physically different field replaceable elements FRE as on a single ingress/ egress port PPL_10 ... PPL_1N; ... ; PPL_20 ... PPL2N. The traffic is either aggregated internally in a standard way on multiple physical links between the line termination modules, or is aggregated externally on multiple physical links towards other switching nodes.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Switching node of a telecommunication system comprising a plurality of Line Termination Modules (LT_0, LT_N) interconnected by a fault tolerant single plane switch fabric,
***characterized in that*** said single plane switch fabric comprises a plurality of physically independent Field Replaceable Elements (FRE_1, FRE_2) interconnected by at least one Switch Module Interface (SMI),
***and in that*** each line termination module (LT_0, LT_N) has a plurality of ports connected to ingress/ egress ports (PPL_10, PPL_1N; PPL_20, PPL2N) of at least two distinct Field Replaceable Elements of said single plane switch fabric.

2. Switching node according to claim 1, **characterized in that** said switch fabric, comprising one or more of the field replaceable elements (FRE_1, FRE_2) interconnected by switch module interfaces, is adapted to perform all system management and configuration, and packet processing as required on data packets transmitted there through, when at least one field replaceable element is present.

3. Switching node according to claim 1, **characterized in that** said switch module interface (SMI) between the field replaceable elements (FRE_1, FRE_2) allows hot-plugging.

4. Switching node according to claim 1, **characterized in that** each line termination module (LT_0, LT_N) is adapted to operate according to a data transport protocol to aggregate traffic on a group of physical interfaces with physically different field replaceable elements (FRE_1, FRE_2) as on a single ingress/ egress port (PPL_10, PPL_1N).

5. Switching node according to claim 4, **characterized in that**, according to a data transport protocol, said traffic is aggregated internally in a standard way on multiple physical links between said line termination modules (LT_0, LT_N).

6. Switching node according to claim 4, **characterized in that**, according to a data transport protocol, said traffic is aggregated externally on multiple physical links towards other switching nodes.

## Patentansprüche

1. Vermittlungsknoten eines Telekommunikationssystems, der eine Vielzahl von Leitungsabschluss-Modulen (LT_0, LT_N) enthält, die durch eine fehlertolerante Schaltmatrix mit einer Ebene miteinander verbunden sind,
**dadurch gekennzeichnet, dass** die Schaltmatrix mit einer Ebene eine Vielzahl physikalisch unabhängiger im Feld austauschbarer Elemente (FRE_1, FRE_2) enthält, die durch mindestens eine Vermittlungsmodul-Schnittstelle (SMI) miteinander verbunden sind,
und **dadurch**, dass jedes Leitungsabschluss-Modul (LT_0, LT_N) eine Vielzahl von Anschlüssen hat, die mit Eingangs-/Ausgangs-Anschlüssen (PPL_10, PPL_1N; PPL_20, PPL_2N) von mindestens zwei verschiedenen im Feld austauschbaren Elementen der Schaltmatrix mit einer Ebene verbunden sind.

2. Vermittlungsknoten gemäß Anspruch 1, **dadurch gekennzeichnet, dass** die Schaltmatrix, die ein oder mehrere im Feld austauschbare Elemente (FRE_1, FRE_2) enthält, die durch Vermittlungsmodul-Schnittstellen miteinander verbunden sind, angepasst ist, die gesamte Systemverwaltung und Konfiguration und Paketverarbeitung durchzuführen, wie sie für die durch sie übertragenen Datenpakete erforderlich ist, wenn mindestens ein im Feld austauschbares Element vorhanden ist.

3. Vermittlungsknoten gemäß Anspruch 1, **dadurch gekennzeichnet, dass** die Vermittlungsmodul-Schnittstelle (SMI) zwischen den im Feld austauschbaren Elementen (FRE_1, FRE_2) ein Einstecken im Betrieb erlaubt.

4. Vermittlungsknoten gemäß Anspruch 1, **dadurch gekennzeichnet, dass** jedes Leitungsabschluss-Modul (LT_0, LT_N) angepasst ist, entsprechend einem Datenübertragungs-Protokoll zu arbeiten, um Verkehr auf einer Gruppe physikalischer Schnittstellen mit physikalisch unterschiedlichen im Feld austauschbaren Elementen (FRE_1, FRE_2), wie auf einem einzigen Eingangs-/Ausgangs-Anschluss (PPL_10, PPL_1N) zusammenzufassen.

5. Vermittlungsknoten gemäß Anspruch 4, **dadurch gekennzeichnet, dass** entsprechend einem Datenübertragungs-Protokoll der Verkehr intern auf eine Standard-Art auf mehreren physikalischen Verbindungsleitungen zwischen den Leitungsabschluss-Modulen (LT_0, LT_N) zusammengefasst wird.

6. Vermittlungsknoten gemäß Anspruch 4, **dadurch gekennzeichnet, dass** entsprechend einem Datenübertragungs-Protokoll der Verkehr extern auf mehreren physikalischen Verbindungsleitungen zu anderen Vermittlungsknoten zusammengefasst wird.

## Revendications

1. Noeud de commutation d'un système de télécommunication comprenant une pluralité de modules de terminaison de ligne (LT_0, LT_N) interconnectés par une matrice de commutation à un seul plan et à tolérance de fautes, **caractérisé**
**en ce que** ladite matrice de commutation à un seul plan comprend une pluralité d'éléments interchangeables sur site physiquement indépendants (FRE_1, FRE_2) interconnectés par au moins une interface de module de commutation (SMI), et
**en ce que** chaque module de terminaison de ligne (LT_0, LT_N) a une pluralité de ports connectés à des ports d'entrée/sortie (PPL_10, PPL_1N ; PPL_20, PPL_2N) d'au moins deux éléments interchangeables sur site, distincts, de ladite matrice de commutation à un seul plan.

2. Noeud de commutation selon la revendication 1, **caractérisé en ce que** ladite matrice de commutation, comprenant un ou plusieurs des éléments interchangeables sur site (FRE_1, FRE_2) interconnectés par des interfaces de module de commutation, est adaptée pour effectuer la gestion et la configuration de tout le système, et pour traiter des paquets comme cela est requis sur des paquets de données transmis par celle-ci, lorsqu'au moins un élément interchangeable sur site est présent.

3. Noeud de commutation selon la revendication 1, **caractérisé en ce que** ladite interface de module de commutation (SMI) entre les éléments interchangeables sur site (FRE_1, FRE_2) permet une connexion à chaud.

4. Noeud de commutation selon la revendication 1, **caractérisé en ce que** chaque module de terminaison de ligne (LT_0, LT_N) est adapté pour fonctionner selon un protocole de transport de données pour agréger le trafic sur un groupe d'interfaces physiques avec des éléments interchangeables sur site physiquement différents (FRE_1, FRE_2) comme sur un simple port d'entrée/sortie (PPL_10, PPL_1N).

5. Noeud de commutation selon la revendication 4, **caractérisé en ce que**, selon un protocole de transport de données, ledit trafic est agrégé en interne d'une manière standard sur de multiples liaisons physiques entre lesdits modules de terminaison de ligne (LT_0, LT_N).

6. Noeud de commutation selon la revendication 4, **caractérisé en ce que**, selon un protocole de transport de données, ledit trafic est agrégé d'une manière externe sur de multiples liaisons physiques allant vers d'autres noeuds de commutation.
